(19) Europäisches Patentamt
European Patent Office
Office européen des brevets

(11) EP 0 668 103 B1

(12) **EUROPÄISCHE PATENTSCHRIFT**

(45) Veröffentlichungstag und Bekanntmachung des Hinweises auf die Patenterteilung:
**28.04.1999 Patentblatt 1999/17**

(51) Int. Cl.[6]: **B01J 23/88**, B01J 27/199

(21) Anmeldenummer: **95101742.5**

(22) Anmeldetag: **09.02.1995**

(54) **Multimetalloxidmassen**
Multimetal oxide masses
Masses d'oxydes multimétalliques

(84) Benannte Vertragsstaaten:
**BE DE ES FR GB NL**

(30) Priorität: **17.02.1994 DE 4405060**

(43) Veröffentlichungstag der Anmeldung:
**23.08.1995 Patentblatt 1995/34**

(73) Patentinhaber:
**BASF Aktiengesellschaft
67063 Ludwigshafen (DE)**

(72) Erfinder:
- **Martin, Friedrich-Georg Dr.
D-69115 Heidelberg (DE)**
- **Tenten, Andreas Dr.
D-67434 Neustadt (DE)**

(56) Entgegenhaltungen:
**EP-A- 0 000 835**
**EP-A- 0 358 411**
**EP-A- 0 424 900**
**EP-A- 0 442 517**
**EP-A- 0 467 144**
**EP-A- 0 575 897**
**FR-A- 2 534 904**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 668 103 B1

## Beschreibung

Die Erfindung betrifft Multimetalloxidmassen der allgemeinen Formel I

$$[A]_p [B]_q \qquad (I),$$

in der die Variablen folgende Bedeutung haben:

A $Mo_{12} X^1_a X^2_b X^3_c X^4_d S_e X^5_f O_x$

B $X^6_g X^7_h O_y$

$X^1$ Phosphor, Arsen, Bor, Germanium und/oder Silicium,

$X^2$ Vanadium, Niob und/oder Wolfram,

$X^3$ Wasserstoff, von dem bis zu 97 mol-% ersetzt sein können durch Kalium, Rubidium, Caesium und/oder Ammonium ($NH_4$),

$X^4$ Antimon und/oder Wismut,

$X^5$ Rhenium und/oder Rhodium,

$X^6$ Kupfer, Eisen, Kobalt, Nickel, Zink, Cadmium, Mangan, Magnesium, Calcium, Strontium und/oder Barium,

$X^7$ Niob, Tantal und/oder Antimon,

a 1 bis 6, vorzugsweise 1 bis 3 und besonders bevorzugt 1,5 bis 2,5,

b 0 bis 6, vorzugsweise 0,2 bis 4 und besonders bevorzugt 0,5 bis 2,

c 3 bis 5,

d 0 bis 6, vorzugsweise 0 bis 3 und besonders bevorzugt 0,5 bis 1,5,

e 0 bis 3, vorzugsweise 0,01 bis 1 und besonders bevorzugt 0,01 bis 0,2,

f 0 bis 3, vorzugsweise 0,01 bis 1 und besonders bevorzugt 0,1 bis 0,5,

g 0,5 bis 1,5, vorzugsweise 0,9 bis 1,1,

h 2 bis 4, vorzugsweise 2 bis 3 und besonders bevorzugt 2 bis 2,5,

x,y Zahlen, die durch die Wertigkeit und Häufigkeit der von Sauerstoff verschiedenen Elemente in I bestimmt werden und

p,q von Null verschiedene Zahlen, deren Verhältnis p/q 12:0,1 bis 12:48, vorzugsweise 12:0,25 bis 12:12 und besonders bevorzugt 12:0,5 bis 12:4 beträgt,
die den Anteil $[A]_p$ in Form dreidimensional ausgedehnter, von ihrer lokalen Umgebung aufgrund ihrer von ihrer lokalen Umgebung verschiedenen chemischen Zusammensetzung abgegrenzter, Bereiche A der chemischen Zusammensetzung

A $Mo_{12} X^1_a X^2_b X^3_c X^4_d S_e X^5_f O_x$
und den Anteil $[B]_q$ in Form dreidimensional ausgedehnter, von ihrer lokalen Umgebung aufgrund ihrer von ihrer lokalen Umgebung verschiedenen chemischen Zusammensetzung abgegrenzter, Bereiche B der chemischen Zusammensetzung

B $X^6_g X^7_h O_y$

enthalten, wobei die Bereiche A, B relativ zueinander wie in einem Gemisch aus feinteiligem A und feinteiligem B verteilt sind, und wobei Multimetalloxidmassen

$[A]_{12}$ [(Nb u./o. $Ta)_{0,5-1,5}$(Fe,Co,Ni,Zn,Cd,Mg,Ca,Sr u./o. $Ba)_{2-4}O_{y}]_{o,6-48}$
und Multimetalloxidmassen

$[A_{12}]$ [(Nb u./o. $Ta)_{2-4}(Cu)_{o,\bar{6}-1,5}Oy]_{0,6-48}$
ausgenommen sind.

Außerdem betrifft vorliegende Erfindung Verfahren zur Herstellung dieser Massen sowie deren Verwendung.

Die EP-A 442 517 und die EP-A 424 900 betreffen Multimetalloxidmassen, deren Element-Bruttozusammensetzung derjenigen der erfindungsgemäßen Multimetalloxidmassen entspricht.

Die Herstellung dieser Multimetalloxidmassen erfolgt dadurch, daß man geeignete Quellen der Bestandteile der gewünschten Multimetalloxidmassen in den erforderlichen Mengen zu einem innigen Trockengemisch verarbeitet und dieses anschließend bei erhöhter Temperatur mehrere Stunden calciniert.

Die resultierenden Multimetalloxidmassen werden u.a. als Katalysatoren zur gasphasenkatalytisch oxidativen Herstellung von Methacrylsäure aus Methacrolein empfohlen. Nachteilig an den Multimetalloxidmassen des Standes der Technik ist jedoch, daß sowohl ihre Aktivität als auch die Selektivität der Methacrylsäurebildung bei vorgegebenem Umsatz nicht voll zu befriedigen vermag. Desgleichen gilt für die Reproduzierbarkeit ihrer Herstellung sowie die Standzeiten während ihres Gebrauchs. Die Standzeiten vermögen insbesondere dann nicht zu befriedigen, wenn die Methacrolein als Hauptbestandteil umfassenden Reaktionsgase als Nebenbestandteile organische Säuren beinhalten.

Aufgabe der vorliegenden Erfindung war daher, Multimetalloxidmassen zur Verfügung zu stellen, die die Nachteile der Multimetalloxidmassen des Standes der Technik nicht aufweisen.

Demgemäß wurden die eingangs definierten Massen I gefunden. Die EP-A 835, die DE-C 3 338 380, die DE-A 42 20 859 und die ältere Anmeldung DE-A 43 07 381 betreffen ebenfalls als Katalysatoren für die gasphasenkatalytisch oxidative Herstellung von Methacrylsäure aus Methacrolein geeignete Multimetalloxidmassen, die in vorteilhafter Weise gleichfalls einen zweiphasigen Aufbau aufweisen, jedoch ist die Elementzusammensetzung der Phasen dieser Multimetalloxidmassen des Standes der Technik von derjenigen der erfindungsgemäßen Multimetalloxidmassen I verschieden.

Ähnliche Multimetalloxidmassen mit mehrphasigem Aufbau beschreiben die EP-A 668 102 und die EP-A 669 164.

Vorteilhafte Massen I sind solche, in denen $X^1$ Phosphor ist. Ferner sind solche Massen I günstig, in denen $X^2$ Vanadium ist. Auch ist es von Vorteil, wenn 3 bis 30 mol-% von $X^3$ Kalium, Rubidium, Caesium und/oder Ammonium sind. Als bevorzugter Wasserstoffersatz wird Caesium verwendet. $X^4$ ist vorzugsweise Antimon und $X^5$ ist mit Vorteil Rhodium. Als $X^6$ kommen in vorteilhafter Weise Kupfer und/oder Zink zum Einsatz, wobei die Verwendung von Kupfer besonders vorteilhaft ist, während es sich bei $X^7$ mit Vorteil um Antimon handelt.

Ferner ist es von Vorteil, wenn wenigstens einer der beiden Anteile $[A]_p$, $[B]_q$ der erfindungsgemäßen Multimetalloxidmassen in den letzteren in Form dreidimensional ausgedehnter Bereiche der chemischen Zusammensetzung A bzw. B enthalten ist, deren Größtdurchmesser $d_A$ bzw. $d_B$ (längste durch den Schwerpunkt des Bereichs gehende Verbindungsstecke zweier auf der Oberfläche (Grenzfläche) des Bereichs befindlicher Punkte) > 0 bis 200 µm, vorzugsweise 1 bis 200 µm, beträgt. Ein besonders günstiger Größtdurchmesserbereich ist 1 bis 50 µm und ganz besonders vorteilhaft ist der Bereich 1 bis 30 µm. Selbstverständlich können die Größtdurchmesser aber auch 50 bis 150 µm oder 75 bis 125 µm betragen (die experimentelle Ermittlung der Größtdurchmesser gestattet z.B. die Methode der energiedispersen Röntgenanalyse (EXDS), z.B. an einer Elektronenstrahl-Mikrosonde JEOL JCXA/733).

Vorzugsweise liegt sowohl der Anteil $[A]_p$ als auch der Anteil $[B]_q$ in den erfindungsgemäßen Multimetalloxidmassen im wesentlichen in kristalliner Form vor. D.h. in der Regel bestehen sowohl die Bereiche A als auch die Bereiche B im wesentlichen aus kleinen Kristalliten, deren Größtausdehnung in typischer Weise 0,1 bis 1 µm beträgt.

Von besonders günstiger Beschaffenheit sind solche Multimetalloxidmassen, deren Bereiche A im wesentlichen aus Kristalliten bestehen, deren Strukturtyp demjenigen des Ammoniumsalzes der Molybdatophosphorsäure ($(NH_4)_3 PO_4 (MoO_3)_{12} \cdot 4H_2O$) entspricht. Das Vorhandensein dieses Kristallstrukturtyps läßt sich z.B. dadurch nachweisen, daß die Röntgenbeugungsaufnahme der erfindungsgemäßen Multimetalloxidmasse das Beugungsmuster des Ammoniumsalzes der Molybdatophosphorsäure (Fingerabdruck) enthält, wobei je nach Elementzusammensetzung geringe Unterschiede bezüglich der Intensitäten und der Lage der Beugungslinien möglich sind. Der Röntgenbeugungsfingerabdruck des Ammoniumsalzes der Molybdatophosphorsäure ist z.B. veröffentlicht als Karteikarte 9-412 der JCPDS-ICDD Kartei (1991), die dem Fachmann bekannt und allgemein zugänglich ist. Eine andere Quelle ist Natl. Bur. Stand. (U.S.), Circ. 539, 8 10 (1959). Umfaßt der Anteil $[A]_p$ das Element Antimon, wird dieses im Unterschied zu den übrigen möglichen Konstituenten dieses Anteils nicht in die den Strukturtyp des Ammoniumsalzes der Molybdatophosphorsäure aufweisenden Kristallite eingebaut und befindet sich an der Oberfläche dieser Kristallite bzw. in den Zwischenräumen. Von Vorteil ist es, wenn sich das Antimon zu 85 bis 95 % seines Gewichtes als Senarmontit (eine kristalline Erscheinungsform des Antimontrioxids) in Räumen zwischen aus im wesentlichen den übrigen Elementen gebildeten Kristalliten des Strukturtyps des Ammoniumsalzes der Molybdatophosphorsäure befindet, während 5 bis 15 % seines Gewichtes in der Oberfläche solcher Kristallite in amorpher Lösung vorliegen (die Herstellung von Senarmontit enthaltenden Multimetalloxidmassen lehrt die ältere Anmeldung DE-A 43 29 907 (O.Z. 0050/44276).

Ferner sind solche erfindungsgemäßen Multimetalloxidmassen bevorzugt, deren Bereiche B im wesentlichen aus Kristalliten bestehen, die den Strukturtyp des Kupferantimonats ($CuSb_2O_6$) aufweisen (Karteikarte 17-284 der JCPDS-ICDD Kartei (1989)), wobei auch hier je nach Elementzusammensetzung geringe Unterschiede bezüglich der Intensität und der Lage der Beugungslinien möglich sind. Neben der Kupferantimonatsstruktur kann auch die Trirutil (= Tapiolit)-Struktur als Beimengung oder als Hauptbestandteil auftreten. Dieser Strukturtyp ist dem Fachmann bekannt (z.B. Karteikarte 23-1124 der JCPDS-ICDD Kartei (1989)). Weitere mögliche Strukturtypen sind derjenige des Columbits (Karteikarte 39-1493 der JCPDS-ICDD Kartei (1989) und derjenige des Niobits (Karteikarte 39-980 der JCPDS-ICDD Kartei (1989)).

Die erfindungsgemäßen Massen I sind in einfacher Weise z.B. dadurch erhältlich, daß man die Oxometallate

$$X^6_g X^7_h O_y \qquad (B)$$

zunächst in feinteiliger Form getrennt vorbildet (Ausgangsmasse 1). Die Oxometallate B können dadurch hergestellt werden, daß man von geeigneten Quellen ihrer elementaren Konstituenten ein möglichst inniges, vorzugsweise feinteiliges, Trockengemisch herstellt und dieses bei Temperaturen von 400 bis 1000°C, vorzugsweise 500 bis 850°C, mehrere Stunden calciniert. Die Calcinierung kann unter Inertgas, aber auch unter einem Gemisch aus Inertgas und Sauerstoff wie z.B. Luft erfolgen. In der Regel nimmt die erforderliche Calcinationsdauer mit zunehmender Calcinierungstemperatur ab. Wesentlich ist, daß es sich bei den Elementquellen entweder bereits um Oxide handelt, oder um solche Verbindungen, die durch Erhitzen, gegebenenfalls in Anwesenheit von Sauerstoff, in Oxide überführbar sind. Neben den Oxiden kommen daher als Ausgangsverbindungen vor allem Halogenide, Nitrate, Formiate, Oxalate, Acetate, Carbonate oder Hydroxide in Betracht. Das innige Vermischen der Ausgangsverbindungen kann in trockener oder in nasser Form erfolgen. Erfolgt es in trockener Form, werden die Ausgangsverbindungen zweckmäßigerweise als feinteilige Pulver eingesetzt. Vorzugsweise erfolgt das innige Vermischen jedoch in nasser Form. Üblicherweise werden die Ausgangsverbindungen dabei in Form einer wäßrigen Lösung und/oder Suspension miteinander vermischt Nach Abschluß des Mischvorgangs wird die fluide Masse getrocknet und nach Trocknung calciniert. Vorzugsweise erfolgt die Trocknung durch Sprühtrocknung (Eingangstemperatur: 250 bis 600°C, Ausgangstemperatur: 80 bis 130°C). Nach erfolgter Calcinierung kann nochmals zerkleinert (z.B. durch Naß- oder Trockenmahlen, z.B. in der Kugelmühle oder durch Strahlmahlen) und aus dem dabei erhältlichen, in der Regel aus im wesentlichen kugelförmigen Partikeln bestehenden, Pulver die Kornklasse mit einem in für die Masse I gewünschten Größtdurchmesserbereich liegenden Korngrößtdurchmesser (in der Regel > 0 bis 200 µm, üblicherweise 1 bis 200 µm, vorzugsweise 1 bis 50 µm und besonders bevorzugt 1 bis 30 µm) durch in an sich bekannter Weise durchzuführendes Klassieren (z.B. Naß- oder Trockensiebung) abgetrennt werden. Die einzelne Pulverpartikel besteht in der Regel aus Kristalliten, deren Größtausdehnung in typischer Weise 0,1 bis 1 µm beträgt. Als besonders günstig erweist es sich von einer wäßrigen Suspension eines $X^7$-Oxids (z.B. Antimontrioxid) auszugehen und darin das $X^6$-Element als Nitrat oder Acetat zu lösen, die resultierende wäßrige Mischung wie beschrieben sprühzutrocknen und das resultierende Pulver dann wie beschrieben zu calcinieren.

In entsprechender Weise wird aus in gleicher Weise geeigneten Quellen der elementaren Konstituenten der Oxometallate A

$$Mo_{12} X^1_a X^2_b X^3_c X^4_d S_e X^5_f O_x \qquad (A)$$

ein feinteiliges inniges Trockengemisch erzeugt, das in der Regel jedoch nicht vorcalciniert wird (Ausgangsmasse 2). Wird die Ausgangsmasse 2 vorcalciniert, so erfolgt die Calcinierung zweckmäßig bei 250 bis 450°C (unter Inertgas oder Inertgas mit Sauerstoff, z.B. Luft).

Besonders geeignete Ausgangsverbindungen sind:

| | |
|---|---|
| Mo: | Ammoniumheptamolybdat, |
| V: | Ammoniummetavanadat, |
| P: | 70 bis 100 gew.-%ige, vorzugsweise 76 bis 85 gew.-%ige Phosphorsäure, |
| Sb: | Senarmontit, |
| S: | Ammoniumsulfat, |
| Re: | Rheniumpentoxid oder Ammoniumperrhenat, |

| | |
|---|---|
| B: | Borsäure, |
| As: | Arsentrioxid, |
| Si: | Wasserglas, |
| Nb: | Ammoniumnioboxalat oder Ammoniumniobat, |
| Alkalimetalle: | Alkalimetallnitrate, |
| $NH_4$: | Ammoniumsulfat, -nitrat oder -carbonat, |
| Bi: | Wismutnitrat. |

Die Ausgangsmasse 1 und die Ausgangsmasse 2 werden anschließend im gewünschten Mengenverhältnis naß oder trocken miteinander vermischt (vorzugsweise trocken), das Gemisch geformt und dann bei Temperaturen von 250 bis 450°C mehrere Stunden calciniert. Die Calcinierung kann unter Inertgas, aber auch unter einem Gemisch aus Inertgas und Sauerstoff wie z.B. Luft erfolgen. Das Formen des Gemisches aus der Ausgangsmasse 1 und der Ausgangsmasse 2 kann z.B. durch verdichten (z.B. Tablettieren, Extrudieren oder Strangpressen) erfolgen, wobei Gleitmittel wie Graphit oder Stearinsäure sowie Formhilfsmittel und Verstärkungsmittel wie Mikrofasern aus Glas, Asbest, Siliciumcarbid oder Kaliumtitanat zugesetzt werden können. Im Falle von Vollkatalysatoren erfolgt das Verdichten unmittelbar zur gewünschten Katalysatorgeometrie, wobei als solche Hohlzylinder mit einem Außendurchmesser und einer Länge von 2 bis 10 mm und einer Wandstärke von 1 bis 3 mm bevorzugt werden. Ganz generell kann das Gemisch aus der Ausgangsmasse 1 und der Ausgangsmasse 2 sowohl vor als auch nach dem Calcinieren geformt werden. Dies kann z.B. auch so erfolgen, daß man das Gemisch nach dem Calcinieren zerkleinert und auf inerte Träger zur Herstellung von Schalenkatalysatoren aufbringt. Das Aufbringen kann aber auch bereits vor der abschließenden Calcinierung erfolgen. In diesem Fall erfolgt das Aufbringen vorzugsweise gemäß der EP-B 293 859. Selbstverständlich können die erfindungsgemäßen Massen I auch in Pulverform eingesetzt werden.

Die erfindungsgemäßen Massen I eignen sich insbesondere als Katalysatoren mit erhöhter Selektivität bei vorgegebenem Umsatz, erhöhter Aktivität, erhöhter Standzeit und verbesserter Reproduzierbarkeit in der Herstellung zur gasphasenkatalytisch oxidativen Herstellung von Methacrylsäure aus Methacrolein.

Die katalytische Gasphasenoxidation von Methacrolein zu Methacrylsäure unter Anwendung der erfindungsgemäßen Katalysatoren kann in an sich bekannter, z.B. in der DE-A 40 22 212 dargestellter, Weise erfolgen.

Desgleichen gilt für die Abtrennung der Methacrylsäure aus dem Produktgasstrom. Das Oxidationsmittel Sauerstoff kann z.B. in Form von Luft, aber auch in reiner Form eingesetzt werden.

Aufgrund der hohen Reaktionswärme werden die Reaktionspartner vorzugsweise mit Inertgas wie $N_2$, $CO_2$, gesättigten Kohlenwasserstoffen und/oder mit Wasserdampf verdünnt.

Vorzugsweise wird bei einem Methacrolein : Sauerstoff : Wasserdampf : Inertgas Verhältnis von 1:(1bis3) : (2bis20) : (3bis30), besonders bevorzugt von 1: (1bis3) : (3bis10) : (7bis18) gearbeitet. Das eingesetzte Methacrolein kann auf verschiedene Weise erhalten worden sein, z.B. durch Gasphasenoxidation von Isobuten, tert. -Butanol oder dem Methylether von tert. -Butanol. Mit Vorteil wird Methacrolein eingesetzt, das durch Kondensation von Propanol mit Formaldehyd in Gegenwart von sekundären Aminen und Säuren in flüssiger Phase gemäß den in der DE-PS 875 114 oder in der DE-AS 28 55 514 beschriebenen Verfahren erhältlich ist. Die Gasphasenoxidation kann sowohl in Wirbelschichtreaktoren als auch in Festbettreaktoren ausgeführt werden. Vorzugsweise wird sie in Rohrbündelreaktoren durchgeführt, in deren Röhren die Katalysatormasse, vorzugsweise in Gestalt zylindrisch geformter Partikel, fest angeordnet ist. Die Reaktionstemperatur beträgt in der Regel 250 bis 350°C, der Reaktionsdruck liegt üblicherweise im Bereich von 1 bis 3 bar und die Gesamtraumbelastung beträgt vorzugsweise 800 bis 1800 Nl/l/h. Unter diesen Bedingungen liegt der Methacroleinumsatz bei einfachem Reaktordurchgang üblicherweise bei 60 bis 90 mol-%. Interessanterweise behalten die erfindungsgemäßen Massen ihre Eigenschaften über eine erhöhte Betriebsdauer im wesentlichen unverändert bei.

Bei dem beschriebenen Verfahren wird üblicherweise jedoch nicht reine Methacrylsäure, sondern ein Produktgemisch erhalten, von welchem die Methacrylsäure nachfolgend abgetrennt werden muß. Dies kann in an sich bekannter Weise erfolgen, z.B. indem man die Reaktionsgase nach indirekter und/oder direkter Kühlung bei Temperaturen von 40 bis 80°C mit Wasser wäscht, wobei eine wäßrige Methacrylsäurelösung erhalten wird, aus der die Methacrylsäure üblicherweise durch Extraktion mit einem organischem Lösungsmittel entfernt und von selbigem durch Destillation abgetrennt wird.

Neben der gasphasenkatalytischen Oxidation von Methacrolein zu Methacrylsäure vermögen die erfindungsgemäßen Massen I aber auch die gasphasenkatalytische Oxidation- und Ammonoxidation von anderen gesättigten, ungesättigten und aromatischen Kohlenwasserstoffen, Alkoholen, Aldehyden und Aminen zu katalysieren.

Genannt sei insbesondere die gasphasenkatalytische Oxidation von anderen 3 bis 6 C-Atome aufweisenden Alkanen, Alkanolen, Alkanalen, Alkenen und Alkenolen (z.B. Propylen, Acrolein, tert. - Butanol, Methylether des tert. - Butanol, iso-Buten, iso-Butan oder iso-Butyraldehyd) zu olefinisch ungesättigten Aldehyden und/oder Carbonsäuren sowie den entsprechenden Nitrilen (Ammonoxidation, vor allem von Propen zu Acrylnitril und von iso-Buten bzw. tert. - Butanol zu Methacrylnitril). Besonders hervorgehoben sei die Herstellung von Acrylsäure, Acrolein und Methacrolein,

sowie die Oxidation von n-Butan zu Maleinsäureanhydrid und diejenige von Butadien zu Furan. Sie eignen sich aber auch zur oxidativen Dehydrierung organischer Verbindungen.

Umsatz, Selektivität und Verweilzeit sind in dieser Schrift, falls nichts anderes erwähnt wird, wie folgt definiert:

$$\text{Umsatz U an Methacrolein (\%)} = \frac{\text{Molzahl umgesetztes Methacrolein}}{\text{Molzahl eingesetztes Methacrolein}} \times 100$$

$$\text{Selektivität S der Methacrylsäurebildung} = \frac{\text{Molzahl Methacrolein umgesetzt zu Methacrylsäure}}{\text{Molzahl Methacrolein insgesamt umgesetzt}} \times 100$$

$$\text{Verweilzeit (sec)} = \frac{\text{mit Katalysator gefülltes Leervolumen des Reaktors (l)}}{\text{durchgesetzte Synthesegasmenge (Nl/h)}} \times 3600$$

Beispiele

a) Herstellung von erfindungsgemäßen Multimetalloxidmassen M und Multimetalloxidmassen MV zum Vergleich (den Gehalt an Wasserstoff, Ammonium und Sauerstoff der resultierenden Massen legt das jeweilige Herstellungsverfahren fest; die Werte wurden nicht regelmäßig ermittelt und sind daher in den angegebenen Stöchiometrien nicht regelmäßig enthalten)

MV1: Example 4 der EP-A 442 517 wurde nachgearbeitet. Als Katalysatorgeometrie wurden Hohlzylinder der Ausmaße 7 mm (Höhe) x 5 mm (Außendurchmesser) x 3 mm(Innendurchmesser) gewählt. Dem resultierenden Katalysator liegt nachfolgende Stöchiometrie zugrunde:

$P_{1,1}\,Mo_{12}\,V_{0,8}\,Cu_{0,2}\,K_{0,7}\,Cs_{0,3}\,Bi_{0,2}\,Sb_{0,7}\,(NH_4)_{0,4}$

MV2: Example 2 der EP-A 424 900 wurde nachgearbeitet (gewählte Katalysatorgeometrie: 5 mm x 3 mm x 2 mm Hohlzylinder). Als Antimontrioxid wurde reiner feinteiliger Senarmontit des zahlenmittleren Durchmessers 1,5 µm verwendet. Resultierende Katalysatorstöchiometrie:

$P_{1,5}\,Mo_{12}\,V_{0,3}\,Cu_{0,1}\,K_1\,Sb_{0,6}$

M1: Ausgangsmasse 2: In 800 g Wasser wurden zunächst 100 g Molybdäntrioxid, danach nacheinander 4,21 g Vanadiumpentoxid, 2,81 g Antimonpentoxid, 2,70 g Bismuttrioxid und 8,21 g 76 gew.-%ige Phosphorsäure eingerührt. Das resultierende Gemisch wurde 12 h bei 95°C gerührt. Von geringfügigen unlöslichen Anteilen wurde abfiltriert. Zu der erhaltenen Lösung wurde zunächst innerhalb von 30 min eine Lösung von 3,37 g Caesiumhydrogencarbonat und 4,06 g Kaliumhydrogencarbonat in 100 g Wasser und danach, ebenfalls innerhalb von 30 min, eine Lösung von 5,6 g Ammoniumcarbonat in 100 g Wasser kontinuierlich zugesetzt. Das resultierende wäßrige Gemisch wurde bei einer Austrittstemperatur von 120°C sprühgetrocknet. Der resultierenden Ausgangsmasse 2 liegt folgende Stöchiometrie zugrunde:

$P_{1,1}\,Mo_{12}\,V_{0,8}\,K_{0,7}\,Cs_{0,3}\,Bi_{0,2}\,Sb_{0,3}$

Ausgangsmasse 1: Gemäß V. Propach, D. Reinen, Zeitschrift für Anorganische und Allgemeine Chemie, Band 369 (1969), S. 278-294 wurde feinteiliges $CuSb_2O_6$ hergestellt.
Die Ausgangsmasse 2 und die Ausgangsmasse 1 wurden im molaren Verhältnis 1/0,2 trocken gemischt. Nach Zusatz von 3 Gew.-% Graphit wurde die Trockenmasse zu Hohlzylindern (7 mm x 5 mm x 3 mm) tablettiert und 5 h bei 380°C im Luftstrom calciniert. Die Stöchiometrie der resultierenden Masse M1 entspricht derjenigen von MV1.

M2: Ausgangsmasse 2: In 250 g Wasser wurden nacheinander 100 g Ammoniumheptamolybdat, 1,66 g Ammoniummetavanadat und 4,77 g Kaliumnitrat eingerührt. Das resultierende wäßrige Gemisch wurde auf 30 bis 35°C erwärmt und dann mit 9,13 g 76 gew.-%iger Phosphorsäure versetzt. Das resultierende wäßrige Gemisch wurde auf 40 bis 45°C erwärmt. Dann wurden 2,75 g feinteiliges Antimontrioxid (reiner Senarmontit) mit einem zahlenmittleren Partikeldurchmesser von 1,5 µm zugesetzt, das wäßrige

Gemisch auf 95°C erhitzt und 30 min bei dieser Temperatur gehalten. Anschließend wurde bei einer Ausgangstemperatur von 120°C sprühgetrocknet.
Der resultierenden Ausgangsmasse 2 liegt folgende Stöchiometrie zugrunde:

$P_{1,5}\,Mo_{12}\,V_{0,3}\,K_1\,Sb_{0,4}$

Ausgangsmasse 1: Wie bei M1. Abschließend wurde jedoch auf eine Partikelgröße von weniger als 50 µm gemahlen.
Die Ausgangsmasse 2 und die Ausgangsmasse 1 wurden im molaren Verhältnis 1/0,1 trocken gemischt, Nach Zusatz von 3 Gew.-% Graphit wurde die Trockenmasse zu Hohlzylindern (5 mm x 3 mm x 2 mm) tablettiert und bei 380°C 5 h lang im Luftstrom calciniert. Die Stöchiometrie der resultierenden Masse M2 entspricht derjenigen von MV2.

M3: Ausgangsmasse 2: In 1200 g Wasser wurden nacheinander 1000 g Ammoniumheptamolybdat, 55,21 g Ammoniummetavanadat und 60 % einer Lösung von 110,24 g Caesiumnitrat in 250 g Wasser gelöst. Die Temperatur der Lösung wurde auf 37 bis 42°C eingestellt und zunächst mit 91,29 g 76 gew.-%iger Phosphorsäure und danach mit 2,49 g Ammoniumsulfat versetzt. Die resultierende wäßrige Mischung wurde auf 42 bis 45°C erwärmt. Daraufhin wurden 96,31 g feinteiliges Antimontrioxid (25 % Valentinit, 75 % Senarmontit) mit einem zahlenmittleren Partikeldurchmesser von 3,2 µm zugegeben und die Mischung auf 95°C erwärmt. Während der Aufheizphase wurden die verbliebenen 40 % der wäßrigen Caesiumnitratlösung, aufgeteilt in drei gleiche Portionen, beim Erreichen der Temperaturen von 80, 90 und 95°C jeweils auf einmal zugesetzt. Anschließend wurde bei einer Austrittstemperatur von 120°C sprühgetrocknet. Der resultierenden Ausgangsmasse 2 liegt folgende Stöchiometrie zugrunde:

$P_{1,5}\,Mo_{12}\,V_1\,Gs_{1,2}\,S_{0,04}\,Sb_{1,4}$

Ausgangsmasse 1: Wie bei M1.
Das Mischen und Fertigstellen des Katalysators erfolgte wie bei M2, das molare Verhältnis von Ausgangsmasse 2 zu Ausgangsmasse 1 betrug jedoch 1/4.

M4: Ausgangsmasse 2: In 1200 g Wasser wurden nacheinander 1000 g Ammoniumheptamolybdat, 55,21 g Ammoniummetavanadat und 128,8 g Caesiumnitrat eingerührt. Die Temperatur der wäßrigen Mischung wurde auf 40 bis 45°C erhöht. Anschließend wurden 91,29 g 76 gew.-%ige Phosphorsäure und 2,49 g Ammoniumsulfat zugegeben und die Temperatur der resultierenden wäßrigen Mischung auf 45 bis 48°C eingestellt. Danach wurden 51,6 g feinteiliges Antimontrioxid (reiner Senarmontit) mit einem zahlenmittleren Partikeldurchmesser von 2,4 µm zugegeben und die wäßrige Mischung auf 95°C erwärmt und 1 h bei dieser Temperatur gehalten. Anschließend wurde bei einer Austrittstemperatur von 110°C sprühgetrocknet.Der resultierenden Ausgangsmasse 2 liegt folgende Stöchiometrie zugrunde:

$P_{1,5}\,Mo_{12}\,V_1\,Gs_{1,4}\,S_{0,04}\,Sb_{0,75}$

Ausgangsmasse 1: Wie bei M1:
Das Mischen und Fertigstellen des Katalysators erfolgte wie bei M2, das molare Verhältnis von Ausgangsmasse 2 zu Ausgangsmasse 1 betrug 1/0,2.

M5: Ausgangsmasse 2: Wie bei M4.
Ausgangsmasse 1: Gemäß V. Propach, D. Reinen, Zeitschrift für Anorganische und Allgemeine Chemie, Bd. 369 (1969) S. 278-294 wurde feinteiliges $NiSb_2O_6$ hergestellt,
Das Mischen und Fertigstellen des Katalysators erfolgte wie bei M2, das molare Verhältnis von Ausgangsmasse 2 zu Ausgangsmasse 1 betrug 1/4.

M6: Ausgangsmasse 2: Wie bei M3, jedoch ohne Zusatz von Ammoniumsulfat und mit veränderter Stochiometrie:

$P_{1,9}\,Mo_{12}\,V_1\,Gs_{1,2}\,Sb_1$

Ausgangsmasse 1: Wie bei M5.
Das Mischen und Fertigstellen des Katalysators erfolgte wie bei M2, das molare Verhältnis von Ausgangsmasse 2 zu Ausgangsmasse 1 betrug 1/0,2.

M7: Ausgangsmasse 2: Wie bei M4.
Ausgangsmasse 1: Gemäß V. Propach, D. Reinen, Zeitschrift für Anorganische und Allgemeine Chemie, Bd. 369 (1969) S. 278-294 wurde feinteiliges $ZnSb_2O_6$ hergestellt.
Das Mischen und Fertigstellen des Katalysators erfolgte wie bei M2, das molare Verhältnis von Ausgangsmasse 2 zu Ausgangsmasse 1 betrug 1/1.

M8: Wie bei M7, das molare Verhältnis von Ausgangsmasse 2 zu Ausgangsmasse 1 betrug jedoch 1/0,2.

M9: Ausgangsmasse 2: Wie bei M4.
Ausgangsmasse 1: Gemäß V. Propach, D. Reinen, Zeitschrift für Anorganische und Allgemeine Chemie, Bd. 369 (1969) S. 278-294 wurde feinteiliges $MnSb_2O_6$ hergestellt.
Das Mischen und Fertigstellen des Katalysators erfolgte wie bei M2, das molare Verhältnis von Ausgangsmasse 2 zu Ausgangsmasse 1 betrug 1/1.

M10: Wie M9, das molare Verhältnis von Ausgangsmasse 2 zu Ausgangsmasse 1 betrug jedoch 1/0,2.

M11: Wie M9, anstelle von feinteiligem $MnSb_2O_6$ wurde jedoch gemäß derselben Referenz hergestelltes $CoSb_2O_6$ verwendet. Das molare Mischungsverhältnis von Ausgangsmasse 2 zu Ausgangsmasse 1 betrug 1/1.

M12: Wie M11, das molare Mischungsverhältnis von Ausgangsmasse 2 zu Ausgangsmasse 1 betrug jedoch 1/0,2.

M13: Wie M12, anstelle von feinteiligem $CoSb_2O_6$ wurde jedoch gemäß derselben Referenz hergestelltes $CuNb_2O_6$ eingesetzt.

M14: Wie M12, anstelle von feinteiligem $CoSb_2O_6$ wurde jedoch gemäß derselben Referenz hergestelltes $CuTa_2O_6$ eingesetzt.

M15: Wie M12, anstelle von feinteiligem $CoSb_2O_6$ wurde jedoch gemäß derselben Referenz hergestelltes $CuSb_{1,8}Nb_{0,2}O_6$ eingesetzt.

M16: Wie M4, die Ausgangsmasse 1 und die Ausgangsmasse 2 wurden jedoch im selben Mischungsvernältnis unter Wasserzusatz geknetet und zu Vollzylindern (6 mm x 6 mm) extrudiert und nach Trocknung wie in M2 calciniert. M17:Ausgangsmasse 2: In 1000 g Wasser wurden nacheinander 1000 g Ammoniumheptamolybdat, 55,21 g Ammoniummetavanadat und 60 % einer Lösung von 128,8 g Caesiumnitrat in 250 g Wasser gelöst. Die Temperatur der Lösung wurde auf 37 bis 42°C eingestellt. Anschließend wurden zunächst 91,29 g 76 gew.-%ige Phosphorsäure und danach 2,49 g Ammoniumsulfat zugegeben. Die Temperatur der resultierenden wäßrigen Mischung wurde auf 40 bis 45°C eingestellt. Anschließend wurden 51,6 g feinteiliges Antimontrioxid (25 % Valentinit, 75 % Senarmontit) mit einem zahlenmittleren Partikeldurchmesser von 3,2 μm zugegeben und die Mischung auf 95°C erwärmt. Während der Aufheizphase wurden die verbliebenen 40 % der Caesiumnitratlösung, aufgeteilt in drei gleiche Portionen, beim Erreichen der Temperaturen von 80, 90 und 95°C jeweils auf einmal zugegeben. Anschließend wurde das wäßrige Gemisch noch 30 min bei 95°C gerührt und kurz vor der Sprühtrocknung (Austrittstemperatur: 110°C) die Ausgangsmasse 1 zugesetzt. Das molare Mischungsverhältnis von Ausgangsmasse 2 zu Ausgangsmasse 1 betrug 1/0,2.
Der Ausgangsmasse 2 liegt folgende Stöchiometrie zugrunde:

$$P_{1,5}\,Mo_{12}\,V_1\,Cs_{1,4}\,S_{0,04}\,Sb_{0,75}$$

Ausgangsmasse 1: wie bei M1.

M18: Wie M9, anstelle von feinteiligem $MnSb_2\,O_6$ wurde jedoch gemäß derselben Referenz hergestelltes $Cu_{0,5}\,Ni_{0,5}\,Sb_2\,O_6$ verwendet. Das molare Mischungsverhältnis von Ausgangsmasse 2 zu Ausgangsmasse 1 betrug 1/0,2.

M19: Ausgangsmasse 2: In 1000 g Wasser wurden 1000 g Molybdäntrioxid und 52,65 g Vanadiumpentoxid suspendiert. Zur resultierenden wäßrigen Suspension wurden 112 g 76 gew.-%ige Phosphorsäure gegeben. Anschließend wurde das Gemisch 12 h bei 95°C gerührt und danach von geringen Anteilen an Ungelöstem abfiltriert. Die resultierende wäßrige Lösung wurde auf 50°C abgekühlt, innerhalb von 2 h kontinuierlich mit 154,2 g Tetrapropylammoniumbromid versetzt und anschließend 1 h bei 50°C gerührt. Anschließend wurde bei einer Austrittstemperatur von 110°C sprühgetrocknet und danach bei 390°C 10 h calciniert. Der resultierenden Ausgangsmasse 2 liegt folgende Stöchiometrie zugrunde:

$P_1 Mo_{12} V_1 H_4$

Ausgangsmasse 1: Wie bei M15.
Die Ausgangsmasse 2 und die Ausgangsmasse 1 wurden im molaren Verhältnis 1/0,2 trocken gemischt. Nach Zusatz von 3 Gew.-% Graphit wurde die Trockenmasse zu Hohlzylindern (7 mm x 5 mm x 3 mm) tablettiert und 5 h bei 380°C im Luftstrom calciniert.

M20: Ausgangsmasse 2: Wie bei M19, 50 mol-% des Phosphors wurden jedoch durch Arsen ersetzt, wobei das Arsen als Arsen(III) -oxid zugesetzt wurde. Ausgangsmasse 1: Wie bei M15.
Das Mischen und Fertigstellen des Katalysators erfolgte wie bei M19.

b) Verwendung der Multimetalloxidmassen aus a) als Katalysatoren für die Gasphasenoxidation von Methacrolein zu Methacrylsäure
Die Katalysatoren wurden in einen Rohrreaktor gefüllt (10 mm Innendurchmesser, 100 g Katalysatorschüttung, Salzbadtemperierung) und bei Reaktionstemperaturen im Bereich von 270 bis 340°C unter Anwendung einer Verweilzeit von 3,6 Sekunden mit einem gasförmigen Gemisch der Zusammensetzung

5 Vol.-% Methacrolein,
10 Vol.-% Sauerstoff,
30 Vol.-% Wasserdampf und
55 Vol.-% Stickstoff

beschickt. Die Salzbadtemperatur wurde im wesentlichen in allen Fällen so eingestellt, daß ein einheitlicher Methacroleinumsatz von ca. 80,5 % resultierte. Eine geringere Salzbadtemperatur weist eine erhöhte Katalysatoraktivität aus. Das aus dem Rohrreaktor strömende Produktgasgemisch wurde gaschromatographisch analysiert. Die Ergebnisse für die Selektivität der Methacrylsäurebildung in Anwendung der verschiedenen Katalysatoren zeigt die nachfolgende Tabelle.

Tabelle

| Katalysator | Reaktionstemperatur (°C) | U (%) | S (%) |
|---|---|---|---|
| MV1 | 290 | 90,5 | 88,7 |
| MV2 | 287 | 80 | 82,5 |
| M1 | 288 | 90,5 | 89,2 |
| M2 | 286 | 80 | 88 |
| M3 | 324 | 80,7 | 89,3 |
| M4 | 289 | 81,2 | 90,8 |
| M5 | 335 | 81 | 80,5 |
| M6 | 302 | 80,9 | 82,4 |
| M7 | 320 | 80,9 | 87,3 |
| M8 | 318 | 81,2 | 88,6 |
| M9 | 274 | 81 | 75,8 |

Tabelle (fortgesetzt)

| Katalysator | Reaktionstemperatur (°C) | U (%) | S (%) |
|---|---|---|---|
| M10 | 275 | 80,3 | 82,2 |
| M11 | 308 | 80,5 | 85,1 |
| M12 | 298 | 80,6 | 86,5 |
| M13 | 295 | 80,4 | 88,9 |
| M14 | 296 | 81,1 | 88,5 |
| M15 | 292 | 81 | 89,8 |
| M16 | 291 | 80,9 | 90,6 |
| M17 | 290 | 81,2 | 90 |
| M18 | 295 | 81 | 85,4 |
| M19 | 278 | 80,4 | 83,9 |
| M20 | 287 | 81,2 | 85,7 |
| Abschließend sei festgestellt, daß die Röntgenbeugungsaufnahme aller Multimetalloxidmassen M1 bis M20 sowohl den Fingerabdruck des Ammoniumsalzes der Molybdatophosphorsäure ( $(NH_4)_3 PO_4 (MoO_3)_{12} \cdot 4H_2O$ ) ) als auch einen Kupferantimonat Fingerabdruck aufwiesen. | | | |

**Patentansprüche**

1. Multimetalloxidmassen der Formel I

$$[A]_p [B]_q \qquad (I),$$

in der die Variablen folgende Bedeutung haben:

A $Mo_{12} X^1_a X^2_b X^3_c X^4_d S_e X^5_f O_x$

B $X^6_g X^7_h O_y$

$X^1$ Phosphor, Arsen, Bor, Germanium und/oder Silicium,

$X^2$ Vanadium, Niob und/oder Wolfram,

$X^3$ Wasserstoff, von dem bis zu 97 mol-% ersetzt sein können durch Kalium, Rubidium, Caesium und/oder Ammonium ($NH_4$),

$X^4$ Antimon und/oder Wismut,

$X^5$ Rhenium und/oder Rhodium,

$X^6$ Kupfer, Eisen, Kobalt, Nickel, Zink, Cadmium, Mangan, Magnesium, Calcium, Strontium und/oder Barium,

$X^7$ Niob, Tantal und/oder Antimon,

a 1 bis 6,

b 0 bis 6,

c 3 bis 5,

d 0 bis 6,

e 0 bis 3,

f 0 bis 3,

g 0,5 bis 1,5,

h 2 bis 4,

x,y Zahlen, die durch die Wertigkeit und Häufigkeit der von Sauerstoff verschiedenen Elemente in I bestimmt werden und

p,q von Null verschiedene Zahlen, deren Verhältnis p/q 12:0,1 bis 12:48 beträgt,
die den Anteil $[A]_p$ in Form dreidimensional ausgedehnter, von ihrer lokalen Umgebung aufgrund ihrer von ihrer lokalen Umgebung verschiedenen chemischen Zusammensetzung abgegrenzter, Bereiche A der chemischen Zusammensetzung

A $Mo_{12} X^1_a X^2_b X^3_c X^4_d S_e X^5_f O_x$
und den Anteil $[B]_q$ in Form dreidimensional ausgedehnter, von ihrer lokalen Umgebung aufgrund ihrer von ihrer lokalen Umgebung verschiedenen chemischen Zusammensetzung abgegrenzter, Bereiche B der chemischen Zusammensetzung

B $X^6_g X^7_h O_y$
enthalten, wobei die Bereiche A, B relativ zueinander wie in einem Gemisch aus feinteiligem A und feinteiligem B verteilt sind, und wobei Multimetalloxidmassen

$[A]_{12}$ [(Nb u./o. Ta)$_{0,5\text{-}1,5}$(Fe,Co,Ni,Zn,Cd,Mg,Ca,Sr u./o. Ba)$_{2\text{-}4}$Oyl$_{o,6\text{-}48}$
und Multimetalloxidmassen

$[A_{12}]$ [(Nb u./o. Ta)$_{2\text{-}4}$(Cu)$_{o,\overline{6}\text{-}1,5}$Oyl$_{0,6\text{-}48}$ ausgenommen sind.

2. Multimetalloxidmassen nach Anspruch 1, in denen e 0,01 bis 1 ist.

3. Multimetalloxidmassen nach Anspruch 1 oder 2, in denen 3 bis 30 mol-% von $X^3$ Caesium sind.

4. Multimetalloxidmassen nach den Ansprüchen 1 bis 3, in denen wenigstens einer der beiden Anteile $[A]_p$, $[B]_q$, in Form dreidimensional ausgedehnter Bereiche enthalten ist, deren Größtdurchmesser 1 bis 200 µm beträgt.

5. Multimetalloxidmassen nach den Ansprüchen 1 bis 4, deren Röntgenbeugungsaufnahme den Fingerabdruck des Strukturtyps des Ammoniumsalzes der Molybdatophosphorsäure ( $(NH_4)_3 PO_4 (MoO_3)_{12} \cdot 4H_2O$) aufweist.

6. Multimetalloxidmassen nach den Ansprüchen 1 bis 5, deren Röntgenbeugungsaufnahme den Fingerabdruck des Strukturtyps des Kupferantimonats aufweist.

7. Multimetalloxidmassen nach den Ansprüchen 1 bis 6, deren Anteil $[A]_p$ das Element Antimon als Senarmontit enthält.

8. Verfahren zur Herstellung von Multimetalloxidmassen gemäß Anspruch 1, durch gekennzeichnet, daß man ein Oxometallat B

B $X^6_g X^7_h O_y$
in feinteiliger Form vorbildet, und mit einem feinteiligen innigen Trockengemisch von Quellen der elementaren Konstituenten eines Oxometallats A

A $Mo_{12} X^1_a X^2_b X^3_c X^4_d S_e X^5_f O_x$
vermischt und das Gemisch bei einer Temperatur von 250 bis 450°C calciniert.

9. Verfahren zur gasphasenkatalytisch oxidativen Herstellung von Methacrylsäure aus Methacrolein, dadurch gekennzeichnet, daß als Katalysator ein Multimetalloxid gemäß der Ansprüche 1 bis 7 verwendet wird.

10. Verfahren nach Anspruch 9, dadurch gekennzeichnet, daß es sich bei dem verwendeten Katalysator um einen Vollkatalysator handelt, dessen Geometrie diejenige eines Hohlzylinders mit einem Außendurchmesser und einer Länge von 2 bis 10 mm und einer Wandstärke von 1 bis 3 mm ist.

## Claims

1. A multimetal oxide composition of the formula I

$$[A]_p\,[B]_q \qquad (I),$$

where

A is $Mo_{12}\,X^1_a\,X^2_b\,X^3_c\,X^4_d\,S_e\,X^5_f\,O_x$

B is $X^6_g\,X^7_h\,O_y$

$X^1$ is phosphorus, arsenic, boron, germanium and/or silicon,

$X^2$ is vanadium, niobium and/or tungsten,

$X^3$ is hydrogen, of which up to 97 mol% may have been replaced by potassium, rubidium, cesium and/or ammonium ($NH_4$),

$X^4$ is antimony and/or bismuth,

$X^5$ is rhenium and/or rhodium,

$X^6$ is copper, iron, cobalt, nickel, zinc, cadmium, manganese, magnesium, calcium, strontium and/or barium,

$X^7$ is niobium, tantalum and/or antimony,

a is from 1 to 6,

b is from 0 to 6,

c is from 3 to 5,

d is from 0 to 6,

e is from 0 to 3,

f is from 0 to 3,

g is from 0.5 to 1.5,

h is from 2 to 4,

x and y are numbers determined by the valency and frequency of the elements other than oxygen in I, and

p and q are numbers other than zero whose ratio p/q is from 12:0.1 to 12:48,
which contains component $[A]_p$ in the form of three-dimensionally extended regions A of the chemical composition

A $Mo_{12}\,X^1_a\,X^2_b\,X^3_c\,X^4_d\,S_e\,X^5_f\,O_x$
which are delimited from their local environment due to their chemical composition which is different from their local environment, and component $[B]_q$ in the form of three-dimensionally extended regions B of the chemical composition

B $X^6_g X^7_h O_y$
which are delimited from their local environment due to their chemical composition which is different from their local environment, where the regions A and B are distributed relative to one another as in a mixture of finely divided A and finely divided B, and where multimetal oxide compositions

$[A]_{12}$ [(Nb and/or Ta)$_{0.5-1.5}$(Fe, Co, Ni, Zn, Cd, Mg, Ca, Sr and/or Ba)$_{2-4}$Oyl$_{0.6-48}$
and multimetal oxide compositions

[$A_{12}$] [(Nb and/or Ta)$_{2-4}$(Cu)$_{0.6-1.5}$Oyl$_{0.6-48}$ are excepted.

2. A multimetal oxide composition as claimed in claim 1, where e is from 0.01 to 1.

3. A multimetal oxide composition as claimed in claim 1 or 2, where from 3 to 30 mol% of $X^3$ is cesium.

4. A multimetal oxide composition as claimed in any of claims 1 to 3, where at least one of the two components $[A]_p$ and $[B]_q$ is in the form of three-dimensionally extended regions whose maximum diameter is from 1 to 200 µm.

5. A multimetal oxide composition as claimed in any of claims 1 to 4, whose X-ray diffraction pattern contains the fingerprint of the molybdatophosphoric acid ammonium salt structural type ($(NH_4)_3PO_4(MoO_3)_{12} \cdot 4H_2O$).

6. A multimetal oxide composition as claimed in any of claims 1 to 5, whose X-ray diffraction pattern contains the fingerprint of the copper antimonate structural type.

7. A multimetal oxide composition as claimed in any of claims 1 to 6, where the component [A]p contains antimony in the form of senarmontite.

8. A process for the preparation of a multimetal oxide composition as claimed in claim 1, which comprises pre-forming an oxometallate B

B $X^6_g X^7_h O_y$
in finely divided form, mixing this with a finely divided, intimate dry mix of sources of the elemental constituents of an oxometallate A

A $Mo_{12} X^1_a X^2_b X^3_c X^4_d S_e X^5_f O_x$ ,
and calcining the mixture at from 250 to 450°C.

9. A process for the preparation of methacrylic acid from methacrolein by gas-phase catalytic oxidation, wherein the catalyst used is a multimetal oxide as claimed in any of claims 1 to 7.

10. A process as claimed in claim 9, wherein the catalyst used is an unsupported catalyst whose geometry is that of a hollow cylinder having an external diameter and a length of from 2 to 10 mm and a wall thickness of from 1 to 3 mm.

**Revendications**

1. Masses d'oxydes multimétalliques de formule I

$$[A]_p [B]_q \quad (I),$$

dans laquelle les variables ont la signification suivante :

A $Mo_{12} X^1_a X^2_b X^3_c X^4_d S_e X^5_f O_x$
B $X^6_g X^7_h O_y$
$X^1$ atome de phosphore, d'arsenic, de bore, de germanium et/ou de silicium,
$X^2$ atome de vanadium, de niobium et/ou de tungstène,
$X^3$ atome d'hydrogène, pouvant être remplacé jusqu'à 97% en modes par du potassium, du rubidium, du césium et/ou de l'ammonium ($NH_4$),
$X^4$ atome d'antimoine et/ou de bismuth,
$X^5$ atome de rhénium et/ou de rhodium,

$X^6$ atome de cuivre, de fer, de cobalt, de nickel, de zinc, de cadmium, de manganèse, de magnésium, de calcium, de strontium et/ou de baryum,
$X^7$ atome de niobium, de tantale et/ou d'antimoine,
a 1 à 6,
b 0 à 6,
c 3 à 5,
d 0 à 6,
e 0 à 3,
f 0 à 3,
g 0,5 à 1,5,
h 2 à 4,
x,y nombres déterminés par la fréquence et la valence dans I des éléments autres que l'oxygène et
p,q nombres différents de 0, dont le rapport p/q vaut de 12:0,1 à 12:48,
contenant la fraction $[A]_p$ sous forme de partie A, s'étendant en trois dimensions, délimitée de son environnement local en raison de sa composition chimique différente de celle de son environnement local, et dont la composition chimique est
A $Mo_{12} X^1_a X^2_b X^3_c X^4_d S_e X^5_f O_x$
et la fraction $[B]_q$ sous forme de partie B, s'étendant en trois dimensions, délimitée de son environnement local en raison de sa composition chimique différente de celle de son environnement local, et dont la composition chimique est
B $X^6_g X^7_h O_y$
les parties A et B étant réparties l'une par rapport à l'autre comme dans un mélange de A finement divisé et de B finement divisé, à l'exclusion des masses d'oxydes multimétalliques

$[A]_{12}$ [(Nb u./o. $Ta)_{0,5-1,5}$(Fe,Co,Ni,Zn,Cd,Mg,Ca,Sr et/ou $Ba)_{2-4}Oyl_{o,6-48}$
et des masses d'oxydes multimétalliques

$[A_{12}]$ [(Nb u./o. $Ta)_{2-4}(Cu)_{o,\bar{6}-1,5}Oyl_{0,6-48}$

2. Masses d'oxydes multimétalliques selon la revendication 1, dans lesquelles e vaut 0,01 à 1.

3. Masses d'oxydes multimétalliques selon la revendication 1 ou 2, dans lesquelles 3 à 30% en moles de $X^3$ sont du césium.

4. Masses d'oxydes multimétalliques selon les revendications 1 à 3, dans lesquelles au moins l'une des deux fractions $[A]_p$, $[B]_q$, est contenue sous forme de partie s'étendant en trois dimensions, dont le diamètre maximal vaut de 1 à 200 µm.

5. Masses d'oxydes multimétalliques selon les revendications 1 à 4, dont l'absorption de rayons X présente l'empreinte du type de structure du sel d'ammonium de l'acide molybdatophosphorique ($(NH_4)_3\ PO_4\ (MoO_3)_{12}$. $4H_2O$).

6. Masses d'oxydes multimétalliques selon les revendications 1 à 5, dont l'absorption de rayons X présente l'empreinte du type de structure de l'antimoniate de cuivre.

7. Masses d'oxydes multimétalliques selon les revendications 1 à 6, dont la fraction $[A]_p$ contient l'élément antimoine sous forme de sénarmontite.

8. Procédé de préparation de masses d'oxydes multimétalliques selon la revendication 1, caractérisé en ce que l'on construit au préalable un oxométallate B

B $X^6_g X^7_h O_y$
sous forme finement divisée, qu'on mélange avec un mélange sec, intime et finement divisé de sources des constituants élémentaires d'un oxométallate A

A $Mo_{12} X^1_a X^2_b X^3_c X^4_d S_e X^5_f O_x$
puis le mélange est calciné à une température de 250-450°C.

**9.** Procédé de préparation d'acide méthacrylique par oxydation catalytique en phase gazeuse de méthacroléine, caractérisé en ce que l'on utilise, en tant que catalyseur, un oxyde multimétallique selon les revendications 1 à 7.

**10.** Procédé selon la revendication 9, caractérisé en ce que le catalyseur utilisé est un catalyseur massif dont la géométrie est celle d'un cylindre creux dont le diamètre extérieur et la longueur sont de 2-10 mm et l'épaisseur de paroi de 1-3 mm.